(19) Europäisches Patentamt
European Patent Office
Office européen des brevets

(11) **EP 1 288 449 B1**

(12) **EUROPÄISCHE PATENTSCHRIFT**

(45) Veröffentlichungstag und Bekanntmachung des Hinweises auf die Patenterteilung:
**26.09.2007   Patentblatt 2007/39**

(51) Int Cl.:
*F01L 9/04* (2006.01)     *G01D 5/22* (2006.01)

(21) Anmeldenummer: **02018856.1**

(22) Anmeldetag: **23.08.2002**

(54) **Vorrichtung und Verfahren zur Detektion der Position eines Objekts**

Device and method for detecting the position of an object

Dispositif et méthode pour détecter la position d'un objet

(84) Benannte Vertragsstaaten:
**DE FR GB**

(30) Priorität: **29.08.2001   DE 10141764**

(43) Veröffentlichungstag der Anmeldung:
**05.03.2003   Patentblatt 2003/10**

(73) Patentinhaber: **Micro-Epsilon Messtechnik GmbH & Co. KG**
**94496 Ortenburg (DE)**

(72) Erfinder:
• **Mednikov, Felix, Prof. Dr.**
  **94496 Ortenburg (DE)**
• **Mednikov, Stanislav**
  **443096 Samara (RU)**
• **Netschaewsky, Mark**
  **443011 Samara (RU)**
• **Schallmoser, Günter**
  **94099 Ruhstorf (DE)**

(74) Vertreter: **Naumann, Ulrich**
**Patentanwälte,**
**Ullrich & Naumann,**
**Luisenstrasse 14**
**69115 Heidelberg (DE)**

(56) Entgegenhaltungen:
**WO-A-98/04886**          **GB-A- 2 287 542**

**Beschreibung**

Die Erfindung betrifft eine Vorrichtung zur Detektion der Position eines Objekts, insbesondere des Ankers eines Ventils, beispielsweise eines Ein- und Auslassventils, Kraftstoffeinspritzventils, Gaswechselventils oder dergleichen, mit mindestens zwei Spulen, vorzugsweise zwei Magnetspulen, die mit Strom beaufschlagbar sind, um das Objekt zwischen den zwei Spulen zu bewegen, wobei die beiden Spulen - wechselweise - zum Bewegen des Objekts zwischen den Spulen und zur Detektion der Position des Objekts dienen. Des Weiteren betrifft die Erfindung ein entsprechendes Verfahren.

Vorrichtung und ein Verfahren zur Detektion der Position eines Objekts, insbesondere des Ankers eines Ventils, beispielsweise eines Ein- und Auslassventils, Kraftstoffeinspritzventils, Gaswechselventils oder dergleichen, mit mindestens zwei Spulen, vorzugsweise zwei Magnetspulen, die mit Strom beaufschlagbar sind, um das Objekt zwischen den zwei Spulen zu bewegen.

Vorrichtungen und Verfahren zur Detektion der Position eines Objekts sind in der Praxis seit langem bekannt. Lediglich beispielhaft wird auf die DE 197 35 375 C1 verwiesen, aus der eine Vorrichtung zur Detektion der Position eines Objekts, nämlich eines Ankers eines Ventils, bekannt ist. Die bekannte Vorrichtung umfasst ein Piezoelement zur Detektion der Position des Ankers des Ventils, wobei das Ventil zwei Magnetspulen aufweist, die mit Strom beaufschlagbar sind, um das Objekt zwischen den beiden Spulen zu bewegen. Die Detektion der Position des Objekts - nämlich des Ankers - erfolgt hierbei indirekt über die Messung der Federkraft von zwei Federn, die den Anker in einer Mittelstellung zwischen den beiden Endpositionen halten, wenn die Spulen stromlos sind. Mittels des Piezoelements kann also aufgrund der Federkraft die Geschwindigkeit des Ankers bestimmt werden, um mit dem vom Piezoelement erzeugten Signal die Schaltung zum Ansteuern des Magnetantriebs so zu regeln, dass eine minimale Auftreffgeschwindigkeit des Ankers in der Endstellung erreicht ist. Idealisiert weisen die Federn eine lineare Kennlinie auf, so dass sich die Federkraft für diesen vereinfachten Fall linear proportional zur Stellung des Ankers ändert.

Die bekannte Vorrichtung ist besonders dahingehend problematisch, dass mittels des Piezoelements lediglich die Endpositionen des Ankers feststellbar sind. Andere Positionen des Ankers lassen sich nur indirekt über die Kennlinie der Federn berechnen. Dies führt zu erhöhten Fehlern bei der Detektion der Position des Ankers.

Aus der DE 198 56 528 A1 ist zudem für sich gesehen ein Ventilhubsensor bekannt, der zwei Stratokörper aufweist. Die Stratokörper sind hierbei in einem Abstand, wobei ein Zwischenraum bildet wird, angeordnet. In diesem Zwischenraum ist ein Hallsensor angeordnet. Ein als Sensorelement ausgestaltetes Objekt ist mit einem Magnetelement versehen und gegenüber dem Hallsensor verschiebbar angeordnet. Der Hallsensor arbeitet hierbei berührungslos. Bei der aus der DE 198 56 528 A1 bekannten Vorrichtung ist insbesondere problematisch, dass Temperaturänderungen am Hallsensor nicht kompensiert werden. Zudem wirkt sich das nicht-lineare Ausgangssignal nachteilig auf die Detektion der Position des Objekts aus. Ferner sind für sich gesehen noch die Queranker-Bauform für Sensoren sowie eine Detektion durch Strom- oder Induktivitätsmessung über dieselbe Spule bekannt.

Sowohl auf der DE-C1-198 36 769 als auch aus der US-A-5 818 680 sind Vorrichtungen und Verfahren zur Detektion der Position eines Objekts bekannt, wonach zwei Spulen eines elektromagnetischen Aktors nicht nur zum Betätigen der Armatur zwischen einer offenen und einer geschlossenen Position, sondern auch zum Bestimmen der Position des Ankers des elektromagnetischen Aktors dienen, ohne dass dazu ein Positionssensor eingesetzt wird. Gemäß DE-C1-198 36 769 wird die Position einer Ankerplatte anhand des durch die Spule fließenden Stroms ermittelt. Gemäß US-A-5 818 680 sind Messstellen vorgesehen, die einen Spannungsprung bei deaktivierter Spule verursachen und die jeweilige Position der Armatur an den entsprechenden Stellen anzeigen. Bei beiden Druckschriften erfolgt das Bewegen des Ankers und das Bestimmen der Position wechselweise wie folgt:

Entsprechend der DE-C1-198 36 769 wird die Ankerplatte durch Abschalten eines unteren Magneten zu einem oberen Magneten bewegt. Die Spule des oberen Magneten wird zur Bestimmung der Position der Ankerplatte in der Nähe des oberen Magneten herangezogen. Danach wird - umgekehrt - die obere Spule deaktiviert, und zwar zum Bewegen der Ankerplatte zum unteren Magneten hin, wobei die Spule des unteren Magneten zur Bestimmung der Position der Ankerplatte herangezogen wird.

Entsprechend der US-A-5 818 680 werden an dem abgeschalteten Magneten unterschiedliche Positionen ermittelt, wobei der untere Magnet zur Aufnahme der Ankerplatte aktiviert wird. Beide Spulen dienen somit einerseits zum Bewegen der Ankerplatte und andererseits zur Detektion der Position der Ankerplatte.

Die aus den Druckschriften D1 und D2 bekannten Vorrichtungen und Verfahren erfordern einen erheblichen konstruktiven Aufwand und liefern obendrein keine hinreichend genauen reproduzierbaren Meßergebnisse.

Erfindungsgemäß wird die voranstehende Aufgabe durch eine Vorrichtung und ein Verfahren zur Detektion der Position eines Objekts mit den Merkmalen der Patentansprüche 1 und 10 gelöst. Danach ist die in Rede stehende Vorrichtung und das in Rede stehende Verfahren zur Detektion der Position eines Objekts derart ausgestaltet und weitergebildet, dass mindestens eine Spule in mindestens zwei Sektionen unterteilt ist, wobei die erste Sektion näher am Objekt angeordnet ist als die zweite Sektion, und dass der Abstand zwischen der zweiten Sektion und dem Objekt größer als die Hälfte des Durchmessers der Spule ist, wobei die Impedanz der ersten Sektion größer ist als die Impedanz

der zweiten Sektion.

In erfindungsgemäßer Weise ist zunächst erkannt worden, dass zusätzliche Mittel, wie beispielsweise Piezoelemente, zur Detektion der Position eines Objekts nur unzureichend geeignet sind, um die Position eines Objekts zu detektieren. In weiter erfindungsgemäßer Weise ist erkannt worden, dass man in Abkehr zu der bisherigen Praxis - nämlich zusätzliche Mittel einzusetzen - eine Detektion der Position des Objekts einzig und allein mittels der beiden Spulen erreichen kann. Dies wird in technischer Hinsicht überraschend einfach dadurch realisiert, dass die beiden Spulen, die üblicherweise einzig und allein zum Bewegen des Objekts zwischen den Spulen dienen, nun - wechselweise - sowohl zum Bewegen des Objekts zwischen den Spulen und zur Detektion der Position des Objekts dienen.

Von ganz besonderer Bedeutung ist die erfindungsgemäße, Konstruktion dahingehend, dass mindestens eine Spule in mindestens zwei Sektionen unterteilt ist, wobei die erste Sektion näher am Objekt angeordnet ist als die zweite Sektion. Dabei ist der Abstand zwischen der zweiten Sektion und dem Objekt größer als die Hälfte des Durchmessers der Spule. Des Weiteren ist von Bedeutung, dass die Impedanz der ersten Sektion größer ist als die Impedanz der zweiten Sektion, so dass durch die Bewegung des Objekts im Wesentlichen nur die Impedanz der ersten Sektion beeinflusst wird, wobei die Impedanz der zweiten Sektion von der Position des Objekts weitestgehend unabhängig ist.

Dabei ist es von Vorteil, wenn die eine Spule zum Bewegen des Objekts verwendet wird, Die andere Spule dient zur Detektion der Position des Objekts, nämlich als eine Art Wirbelstromsensor.

Im Rahmen einer besonders einfachen Ausgestaltung könnte das Objekt an einem Schaft angeordnet sein. Insbesondere wenn es sich bei dem Objekt um den Anker eines Ventils handelt, wäre eine besonders gleichförmige Bewegung des Objekts gewährleistet.

Im Hinblick auf eine besonders robuste und funktionelle Ausgestaltung könnten die Spulen in mindestens einem Körper angeordnet sein. In besonders vorteilhafter Weise könnte der Körper hierbei ferromagnetisch sein.

Hinsichtlich einer besonders funktionellen Ausgestaltung könnte das Objekt zwischen zwei Endpositionen bewegbar sein. Das Objekt könnte hierbei mittels mindestens einer Feder in einer Position, insbesondere einer Endposition des Ventils, gehalten sein. Für den Fall dass es sich bei dem Objekt um den Anker eines Ventils handelt, könnte die Position, in welcher das Objekt mittels der Feder gehalten wird, in besonders vorteilhafter Weise die Schließstellung des Ventils sein. Es wäre allerdings auch denkbar, dass das Objekt mittels zweier Federn in jeder beliebigen Position gehalten wird.

Vorzugsweise könnte die Impedanz der ersten Sektion ca. drei- bis fünfmal größer, sein als die Impedanz der zweiten Sektion.

Im Rahmen einer besonders einfachen Ausgestaltung könnte die Spule oder könnten die Spulen jeweils mindestens zwei Anschlusspunkte und mindestens einen Abgriff aufweisen. Dabei könnten die Anschlusspunkte und der Abgriff am Ende der Sektionen angeordnet sein. Somit wäre die Bestromung und die Messung der Impedanz der jeweiligen Sektion besonders einfach ausgestaltet.

In besonders vorteilhafter Weise könnte die Güte der beiden Sektionen der Spule gleich sein, wenn sich das Objekt in einer Endposition befindet. In besonders einfacher Weise könnte die Anpassung der Güte dabei durch die Anpassung des Verhältnisses der Anzahl der Windungen der ersten und der zweiten Sektion erreicht sein.

Im Hinblick auf eine besonders einfache Schaltung könnte mindestens eine der Spulen mit mindestens einem Operationsverstärker einen Spannungs-Strom-Wandler bilden. Die erste Sektion der Spule könnte dann von dem Spannungs-Strom-Wandler gespeist werden, wobei der Strom von der Impedanz der zweiten Sektion abhängig wäre.

Der Abgriff zwischen der ersten und zweiten Sektion könnte hierbei mit dem invertierenden Eingang des Operationsverstärkers verbunden sein. Der nichtinvertierende Eingang des Operationsverstärkers könnte zudem mit einem Multiplexer verbunden sein. Mittels des Multiplexers könnte eine Spannung $U_{in}$ erzeugt werden, die beispielsweise eine Rechteckspannung sein könnte.

In besonders vorteilhafter Weise könnte der Multiplexer mittels eines Mikrorechners oder eines Quarzoszillators steuerbar sein. Die Frequenz des Mikrorechners oder des Quarzoszillators könnte hierbei sehr viel größer sein, beispielsweise 50 kHz bis 250 kHz, als die Frequenz des Stroms, mit der die Spule zur Bewegung des Objekts angesteuert ist.

Im Hinblick auf eine besonders einfache Ausgestaltung könnte der Spannungsabfall an der ersten Sektion mittels eines Instrumentalverstärkers erfassbar sein, wobei der Zusammenhang

$$U_v = K \cdot U_{in} \cdot \left| \frac{Z_{s1}}{Z_{s2}} \right| \cdot e^{\gamma x}$$

besteht. Hierbei ist $U_{in}$ die Spannung am nicht invertierenden Eingang des Operationsverstärkers, $Z_{s1}$ die Impedanz der ersten Sektion, wenn sich das Objekt in der Endposition befindet, in welcher der Abstand zwischen der Spule und dem Objekt minimal ist, $Z_{s2}$ die Impedanz der zweiten Sektion, die im Wesentlichen unabhängig vom Abstand des Objekts zu der Spule ist, K der Verstärkungsfaktor des Instrumentalverstärkers und $\gamma$ ein Koeffizient ist, der von der Geometrie der Spule abhängig ist. Die Spannung am Ausgang des Instrumentalverstärkers $U_v$ ist somit vom Verhältnis der Impedanzen $Z_{s1}$ und $Z_{s2}$ der ersten und zweiten Sektion abhängig.

Der Ausgang des Instrumentalverstärkers könnte mit dem Eingang eines Differentiators verbunden sein. Der Ausgang des Differentiators könnte dann die Spannung

$$U_S = K \cdot \left[ U_{in} \cdot \frac{Z_{s1}}{Z_{s2}} \right] \cdot e^{\gamma x} \cdot e^{-t/\tau}$$

aufweisen, wobei die Zeitkonstante des Differentiators ist.

Der Ausgang des Differentiators könnte mit einem Komparator verbunden sein. Die Ausgangsspannung des Differentiators $U_S$ könnte dann mittels des Komparators mit einer konstanten Spannung $U_O$ vergleichbar sein. Am Ausgang des Komparators könnte somit ein pulsweitenmoduliertes Signal erzeugbar sein, wenn der Multiplexer mittels des Mikrorechners oder des Quarzoszillators gesteuert ist.

Alternativ könnte der Ausgang des Komparators mit einem insbesondere monostabilen Multivibrator verbunden sein. Mittels des Ausgangssignals des Multivibrators könnte sodann der Multiplexer steuerbar sein. In diesem Falle würde die Vorrichtung wie ein frei schwingender Oszillator mit einer Periode $T = t_x + \Delta t$ arbeiten, wobei $\Delta t$ die Zeitkonstante des Monoflops ist.

In besonders einfacher Weise könnte sodann mittels einer Auswerteschaltung die Position des Objekts ermittelbar sein. Diese Auswerteschaltung könnte hierbei in jedweder Form realisiert sein.

Erfindungsgemäß wird die obige Aufgabe auch durch das Verfahren zur Detektion der Position eines Objekts mit den Merkmalen des Patentanspruchs 27 gelöst. Danach ist das in Rede stehende Verfahren zur Detektion der Position eines Objekts derart ausgestaltet und weitergebildet, dass die beiden Spulen - wechselweise - zum Bewegen des Objekts zwischen den Spulen und zur Detektion der Position des Objekts dienen.

Im Hinblick auf eine besonders zuverlässige Detektion der Position des Objekts könnte die zur Detektion verwendete Spule mit hochfrequentem Strom, vorzugsweise kleiner Amplitude, gespeist werden. Die Impedanz der zur Detektion des Objekts verwendeten Spule würde dann exponentiell vom Abstand des Objekts abhängen. Die zur Detektion verwendete Spule würde somit nach dem Wirbelstromprinzip arbeiten, wobei es möglich ist, die Position des Objekts linear und gleichzeitig temperaturstabil und unabhängig von Schwankungen der Versorgungsspannung zu ermitteln. Eine Temperaturkompensation könnte hierbei zudem auf unterschiedliche Weise realisiert werden, beispielsweise mittels der Anordnung einer Kompensationsspule.

Mindestens eine Spule könnte mit mindestens einem Operationsverstärker einen Spannungs-Strom-Wandler bilden.

Im Rahmen einer besonders funktionellen Ausgestaltung könnte mindestens eine Spule in mindestens zwei Sektionen unterteilt sein, wobei die erste Sektion dabei näher am Objekt angeordnet sein könnte als eine zweite Sektion, so dass die Position des Objekts durch die Änderung der Impedanz der ersten Sektion bestimmt werden könnte. Das Wirkungsprinzip beruht somit auf dem Effekt der Entmagnetisierungswirkung von Wirbelströmen, die durch das elektromagnetische Feld der Spule in dem Objekt induziert werden. Im Ergebnis verändert sich die Impedanz der ersten Sektion der Spule mit der Bewegung des Objekts beträchtlich, wobei sich zur gleichen Zeit die Impedanz der zweiten Sektion in Bezug auf die Lage des Objekts verhältnismäßig wenig ändert, weil sie entfernt genug vom Objekt angeordnet ist. Die erste Sektion der Spule könnte hierbei durch eine Stromquelle, nämlich den mittels der Spule und dem Operationsverstärker gebildeten Spannungs-Strom-Wandler, gespeist werden, wobei der Strom dann von der Impedanz der zweiten Sektion abhängig wäre.

Der Spannungsabfall an der ersten Sektion könnte mittels eines Instrumentalverstärkers erfasst werden, wobei der Zusammenhang

$$U_S = U_0 = K \cdot \left[ U_{in} \cdot \left| \frac{Z_{s1}}{Z_{s2}} \right| \right] \cdot e^{\gamma x} \cdot e^{-t_0(x)/\tau}$$

besteht.

Der Ausgang des Instrumentalverstärkers könnte dann mit dem Eingang eines Differentiators verbunden sein. Am Ausgang des Differentiators würde somit die Spannung

$$U_S = K \cdot \left[ U_{in} \cdot \left| \frac{Z_{s1}}{Z_{s2}} \right| \right] \cdot e^{\gamma x} \cdot e^{-t_0(x)/\tau}$$

anliegen, wobei $\tau$ die Zeitkonstante des Differentiators ist.

Der Ausgang des Differentiators könnte sodann mit einem Komparator verbunden sein, so dass die Spannung am Ausgang des Differentiators mittels des Komparators mit einer konstanten Spannung $U_0$ verglichen wird.

$$U_S = U_0 = K \cdot \left[ U_{in} \cdot \left| \frac{Z_{s1}}{Z_{s2}} \right| \right] \cdot e^{\gamma x} \cdot e^{-t_0(x)/\tau}$$

Am Ausgang des Komparators liegen nur Signale der Zeitdauer $t_0(x)$ für bestimmte Positionen des Objekts an. Die Zeit ist somit proportional zur Position des Objekts und zwar

$$t_0(x) = \tau \cdot \ln \left[ K \cdot \frac{U_{in}}{U_0} \cdot \left| \frac{Z_{s1}}{Z_{s2}} \right| \right] + \gamma x \quad .$$

Mittels der Änderung der konstanten Spannung und/oder der Zeitkonstanten könnten dann die Werte der Zeit geregelt werden.

Es gibt nun verschiedene Möglichkeiten die Lehre der vorliegenden Erfindung in vorteilhafter Weise auszugestalten und weiterzubilden. Dazu ist einerseits auf die den Patentansprüchen 1 und 27 nachgeordneten Patentansprüche und andererseits auf die nachfolgende Erläuterung bevorzugter Ausführungsbeispiele der erfindungsgemäßen Vorrichtung und des erfindungsgemäßen Verfahrens zur Detektion der Position eines Objekts anhand der Zeichnung zu verweisen. In Verbindung mit der Erläuterung der bevorzugten Ausführungsbeispiele der erfindungsgemäßen Vorrichtung und des erfindungsgemäßen Verfahrens zur Detektion der Position eines Objekts anhand der Zeichnung werden auch im Allgemeinen bevorzugte Ausgestaltungen und Weiterbildungen der Lehre erläutert. In der Zeichnung zeigt

Fig. 1     in einer schematischen Darstellung, ein Ausführungsbeispiel eines Teils einer erfindungsgemäßen Vorrichtung zur Detektion der Position eines Objekts, nämlich den Teil eines Ventils,

Fig. 2     in einer schematischen Darstellung, einen Ausschnitt der Spulen des Ventils der Fig. 1

Fig. 3     in einer schematischen Darstellung, einen Schaltplan einer erfindungsgemäßen Vorrichtung,

Fig. 4     in einer schematischen Darstellung, den Zeitverlauf der Spannungen für verschiedene Positionen des Objekts bei einer ersten Ausführungsform und

Fig. 5     in einer schematischen Darstellung, den Zeitverlauf der Spannungen für verschiedene Positionen des Objekts bei einer zweiten Ausführungsform.

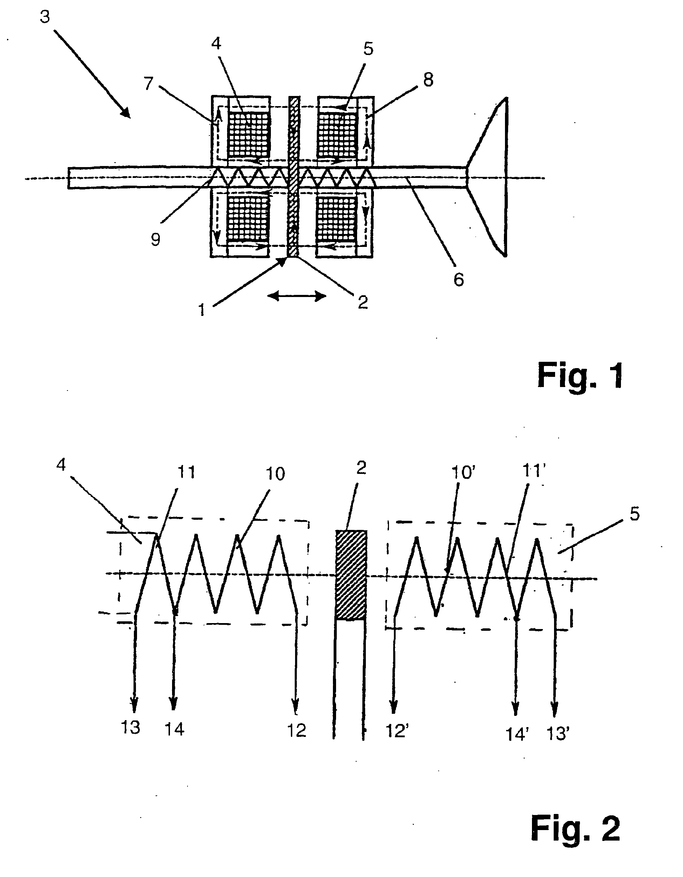

Fig. 1 zeigt ein Ausführungsbeispiel eines Teils einer erfindungsgemäßen Vorrichtung zur Detektion der Position eines Objekts 1, nämlich den Anker 2 eines Ventils 3. Das Ventil 3 umfasst zwei Spulen 4, 5, in diesem Fall Magnetspulen, die mit Strom beaufschlagbar sind, um den Anker 2 zwischen den Spulen 4 und 5 zu bewegen.

Die beiden Spulen 4, 5 dienen - wechselweise - zum Bewegen des Ankers 2 zwischen Spulen 4, 5 und zur Detektion der Position des Ankers 2.

Der Anker 2 ist an einem Schaft 6 und die Spulen 4, 5 sind in zwei ferromagnetischen Körpern 7, 8 angeordnet. Der Anker 2 ist mittels der beiden Spulen 4, 5 zwischen zwei Endpositionen, nämlich der geöffneten und der geschlossenen Stellung des Ventils, bewegbar und wird mittels einer Feder 9 in der Position gehalten, in der das Ventil 3 geschlossen ist. Die beiden Spulen 4, 5 werden wechselweise bestromt, um den Anker 2 zwischen den Spulen 3, 5 zu bewegen und das Ventil 3 somit zu öffnen und zu schließen.

Zusätzlich wird, wenn die Spule 4 zur Bewegung des Ankers 2 bestromt wird, die Spule 5 zur Bestimmung der Position des Ankers 2 verwendet und umgekehrt. Wenn der Anker 2 sich in der jeweiligen Endposition befindet und der Haltestrom in der jeweiligen Spule 4, 5 abgeschaltet wird, so dass der Anker 2 von der sich entspannenden Feder 9 in Richtung auf die andere Endstellung in Bewegung gesetzt wird, wird die Spule 4, 5 mit hochfrequentem Strom gespeist.

Die Spulen 4, 5 sind in jeweils zwei Sektionen 10, 11, 10', 11' - wie in Fig. 2 dargestellt - unterteilt. Die erste Sektion 10, 10' ist hierbei näher am Anker 2 angeordnet als die zweite Sektion 11, 11'. Damit die zweite Sektion 11, 11' zusätzlich noch unabhängiger von der Position des Ankers 2 ist, ist der Abstand zwischen der zweiten Sektion 11, 11' und dem Anker 2 größer als die Hälfte des Durchmessers der Spulen 4, 5. Zudem ist die Impedanz der ersten Sektion 10, 10' größer, in diesem Fall ca. 4 mal größer, als die Impedanz der zweiten Sektion 11, 11' gewählt.

Die Spulen 4, 5 weisen jeweils zwei Anschlusspunkte 12, 12', 13, 13' und einen Abgriff 14, 14' auf, die an den jeweiligen Endpunkten der Sektionen 10, 11, 10', 11' angeordnet sind.

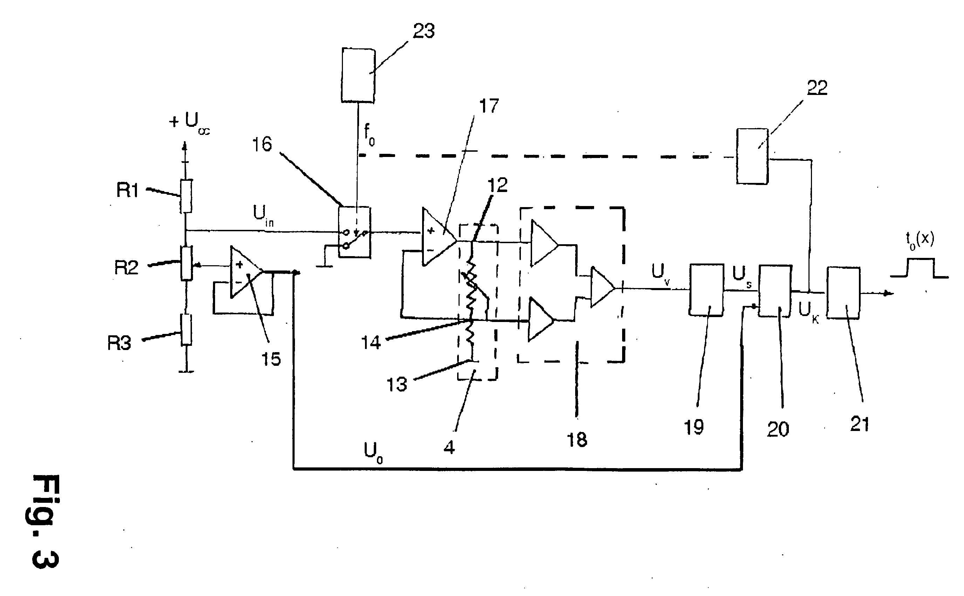

Zur Ermittlung der Position eines zwischen den Spulen 4, 5 bewegten Ankers 2 weist die Schaltung, wie in Fig. 3 gezeigt, einen Spannungsteiler aus drei Widerständen R1, R2 und R3 auf, wobei der Spannungsteiler von einer Spannungsquelle $U_{cc}$ gespeist wird.

Mit Hilfe eines Operationsverstärkers 15 und dem als Potentiometer ausgeführten Widerstand R2 wird eine Referenzspannung $U_O$ erzeugt. Zwischen den Widerständen R1 und R2 wird die Spannung $U_{in}$ abgegriffen, die zum Eingang eines Multiplexers 16 geführt wird, dessen zweiter Eingang mit Masse verbunden ist.

Der Ausgang des Multiplexers 16 ist mit einem Spannungs-Strom-Wandler verbunden, der die Spulen 4, 5 und einen Operationsverstärker 17 umfasst. Der Ausgang des Multiplexers 16 ist dabei mit dem nichtinvertierenden Eingang des Operationsverstärkers 17 verbunden, wobei der invertierende Eingang des Operationsverstärkers 17 mit dem Abgriff 14 der Spule 4 verbunden ist, dessen Anschlusspunkt 12 mit dem Ausgang des Operationsverstärkers 17 und dessen Anschlusspunkt 13 mit Masse verbunden ist.

Der Spannungsabfall zwischen dem Anschlusspunkt 12 und dem Abgriff 14 der Spule 4 wird mittels eines Instrumentalverstärkers 18 abgegriffen und über eine Kapazität - hier nicht dargestellt - mit dem invertierenden Eingang eines Differentiators 19 verbunden, wobei der Ausgang des Instrumentalverstärkers 18 über einen Widerstand - hier nicht dargestellt - mit dem invertierenden Eingangs des Differentiators 19 verbunden ist.

Der Ausgang des Differentiators 19, an dem die Spannung $U_s$ liegt, ist mit dem nichtinvertierenden Eingang eines Komparators 20 verbunden, dessen invertierender Eingang mit dem Ausgang des Operationsverstärkers 15 verbunden ist, wobei die Referenzspannung $U_O$ anliegt. Der Ausgang des Komparators 20 ist mit dem Eingang eines Schmitt-Triggers 21 verbunden, an dessen Ausgang ein Zeitintervall erzeugt wird, das proportional zu der Position des Ankers 2 ist.

Bei einer anderen ebenfalls in Fig. 3 dargestellten Ausführungsform wird der Ausgang des Komparators 20 über einen Monoflop-Multivibrator 22 mit dem Steuereingang des Multiplexers 16 verbunden. Der Steuereingang des Multiplexers 16 wird mit einem Rechteckoszillator, in diesem Fall einem Mikrorechner 23, verbunden. Der Mikrorechner 23 steuert den Multiplexer 16 dabei mit einem Rechtecksignal mit der Frequenz $f_o$ an, wobei in der ersten Halbperiode des Rechtecksignals ein Eingang des Multiplexers 16 mit dem aus den Widerständen R1, R2 und R3 gebildeten Spannungsteiler verbunden ist und in der zweiten Halbperiode des Rechtecksignals derselbe Eingang des Multiplexers 16 mit Masse verbunden ist. Die Frequenz $f_o$ beträgt hierbei einen Wert von ca. 50 bis 250 kHz. Bei einer zweiten Ausführungsform ist der Steuereingang des Multiplexers 16 mit dem Ausgang des monostabilen Multivibrators 22 verbunden.

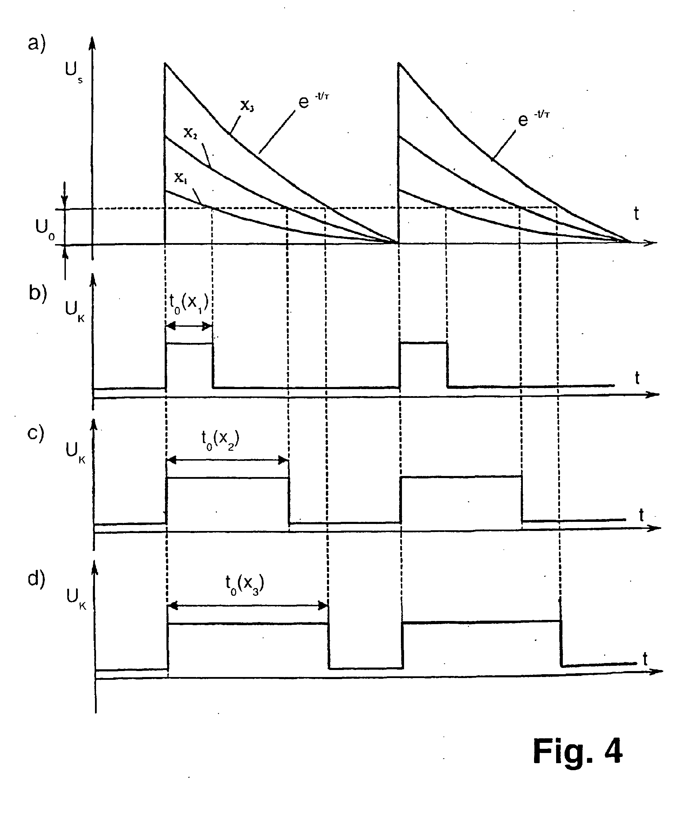

Fig. 4 zeigt die Abhängigkeit der Spannung $U_s$ am Ausgang des Operationsverstärkers 19 von der Zeit t für drei unterschiedliche Positionen des Ankers $x_1$, $x_2$, $x_3$. Die Spannung $U_s$ wird mittels des Komparators 20 mit der Spannung $U_o$ verglichen. Am Ausgang des Komparators 20 liegen Signale mit der Zeitdauer $t_0(x_1)$, $t_0(x_2)$ und $t_0(x_3)$ - jeweils dargestellt in Fig. 4b, Fig. 4c und Fig. 4d - für die drei verschiedenen Positionen des Ankers 2 an. Durch die konstante Frequenz $f_o$ der Speisespannung wird durch die vom Abstand abhängige Zeitdauer $t_0(x)$ ein Signal mit Pulsweitenmodulation erzeugt.

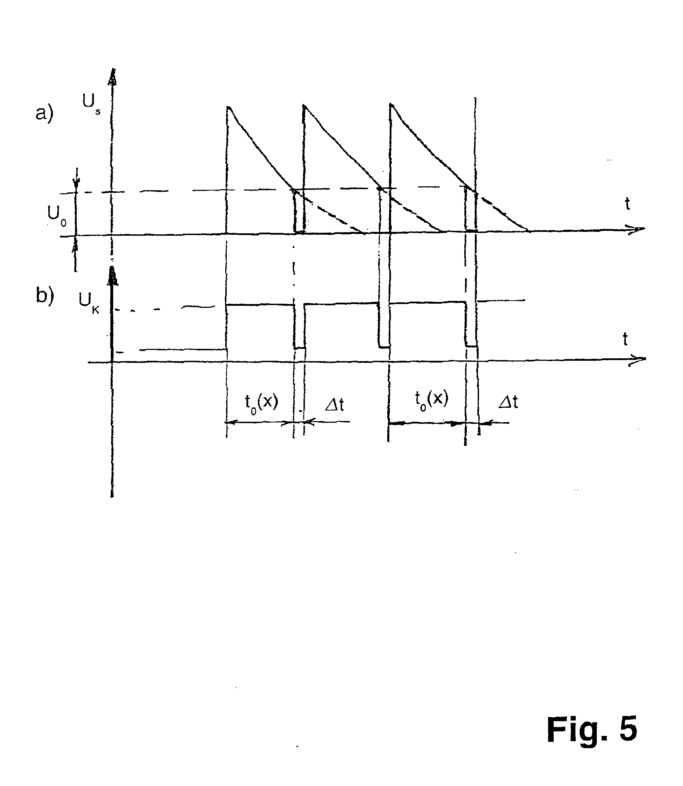

Fig. 5 zeigt die Abhängigkeit der Spannung $U_S$ von der Zeit für eine Position $x_1$ des Ankers 2 bei der zweiten Ausführungsform einer erfindungsgemäßen Vorrichtung. Wenn die Spannung $U_S$ mit der Referenzspannung $U_o$ gleich ist, entsteht am Ausgang des Komparators 20 ein Signal $U_K$ mit der Zeitdauer $t_0(x_1)$.

Mit fallender Flanke der Spannung $U_K$ wird der monostabile Multivibrator 22 gesteuert, der nach der konstanten Zeit $\Delta t$ umschaltet. Zu dieser Zeit wird die Speisung der Spule 4, bzw. 5 unterbrochen und dann mittels des Multiplexers 16 wieder eingeschaltet. Diese erfindungsgemäße Ausführungsform bietet den Vorteil einer hohen Messgeschwindigkeit, da die Anordnung wie ein freischwingender Oszillator arbeitet und nicht an eine fest vorgebbare Frequenz $f_o$ gebunden ist. Als Ausgangssignal steht somit ein reines Zeitintervall $T = t_x + \Delta t$, womit eine Frequenzmodulation erreicht ist.

Hinsichtlich weiterer Details wird zur Vermeidung von Wiederholungen auf die allgemeine Beschreibung verwiesen.

Schließlich sei ausdrücklich darauf hingewiesen, dass die voranstehend beschriebenen Ausführungsbeispiele lediglich der Erörterung der beanspruchten Lehre dienen, diese jedoch nicht auf das Ausführungsbeispiel einschränken.

**Patentansprüche**

1. Vorrichtung zur Detektion der Position eines Objekts (1), insbesondere des Ankers (2) eines Ventils (3), beispielsweise eines Ein- und Auslassventils, Kraftstoffeinspritzventils, Gaswechselventils oder dergleichen, mit mindestens zwei Spulen (4, 5), vorzugsweise zwei Magnetspulen, die mit Strom beaufschlagbar sind, um das Objekt (1) zwischen den zwei Spulen (4, 5) zu bewegen, wobei die beiden Spulen (4, 5) - wechselweise - zum Bewegen des Objekts (1) zwischen den Spulen (4, 5) und zur Detektion der Position des Objekts (1) dienen **dadurch gekennzeichnet, dass** mindestens eine Spule (4, 5) in mindestens zwei Sektionen (10, 11, 10', 11') unterteilt ist, wobei die erste Sektion (10, 10') näher am Objekt (1) angeordnet ist als die zweite Sektion (11, 11'), und dass der Abstand zwischen der zweiten Sektion (11, 11') und dem Objekt (1) größer als die Hälfte des Durchmessers der Spule (4, 5) ist, wobei die Impedanz der ersten Sektion (10, 10') größer ist als die Impedanz der zweiten Sektion (11,11').

2. Vorrichtung nach Anspruch 1, **dadurch gekennzeichnet, dass** das Objekt (1) an einem Schaft (6) angeordnet ist.

3. Vorrichtung nach Anspruch 1 oder 2, **dadurch gekennzeichnet**, **dadurch gekennzeichnet, dass** die Spulen (4, 5) in mindestens einem Körper (7, 8) angeordnet sind, wobei der oder die Körper (7, 8) vorzugsweise ferromagnetisch ist.

4. Vorrichtung nach einem der Ansprüche 1 bis 3, dass das Objekt (1) zwischen zwei Endpositionen bewegbar ist und/ oder dass das Objekt (1) mittels mindestens einer Feder (9) in einer Position, insbesondere einer Endposition des Ventils (3), gehalten ist.

5. Vorrichtung nach einem der Ansprüche 1 bis 4, **dadurch gekennzeichnet, dass** die Impedanz der ersten Sektion (10, 10') ca. drei- bis fünfmal größer ist als die Impedanz der zweiten Sektion (11, 11'), wobei mindestens eine Spule (4, 5) mindestens zwei Anschlusspunkte (12, 12', 13, 13') und mindestens einen Abgriff (14, 14'), vorzugsweise an den jeweiligen Endpunkten der Sektionen (10, 11, 10', 11'), aufweisen kann und/oder wobei die Güte der beiden Sektionen (10, 11, 10', 11') der Spule (4, 5) gleich sein kann, wenn sich das Objekt (1) in der Endposition befindet und/oder wobei die Anspassung der Güte vorzugsweise durch die Anpassung des Verhältnisses der Anzahl der Windungen der ersten (10, 11) und zweiten Sektion (10', 11') erreicht ist.

6. Vorrichtung nach einem der Ansprüche 1 bis 5, **dadurch gekennzeichnet, dass** mindestens eine der Spulen (4, 5) mit mindestens einem Operationsverstärker (17) einen Spannungs-Strom-Wandler bildet, wobei der Abgriff (14, 14') zwischen der ersten (10, 10') und zweiten Sektion (11, 11') mit dem invertierenden Eingang des Operationsverstärkers (17) verbunden sein kann, und/oder wobei ein Multiplexer (16) mit dem nichtinvertierenden Eingang des Operationsverstärkers (17) verbunden sein kann und/oder wobei der Multiplexer (16) mittels eines Mikrorechners (23) oder eines Quarzoszillators steuerbar sein kann und/oder wobei die Frequenz des Mikrorechners oder Quarzoszillators sehr viel größer ist als die Frequenz des Stroms, mit der die Spule (4, 5) zur Bewegung des Objekts (1) angesteuert sein kann.

7. Vorrichtung nach Anspruch 5 oder 6, **dadurch gekennzeichnet, dass** der Spannungsabfall an der ersten Sektion (10, 10') mittels eines Instrumentalverstärkers (18) erfassbar ist, wobei ein Zusammenhang

$$U_v \approx K \cdot U_{in} \cdot \left| \frac{Z_{s1}}{Z_{s2}} \right| \cdot e^{\gamma \cdot x}$$

besteht, wobei der Ausgang des Instrumentalverstärkers (18) mit dem Eingang eines Differentiators (19) verbunden sein kann und/oder wobei der Ausgang des Differentiators (19) die Spannung

$$U_S = K \cdot \left[ U_{in} \cdot \frac{Z_{s1}}{Z_{s2}} \right] \cdot e^{\gamma x} \cdot e^{-t_0(x)/\tau}$$

aufweisen kann und/oder wobei der Ausgang des Differentiators (19) mit einem Komparator (20) verbunden sein kann und/oder wobei am Ausgang des Komparators (20) ein plusweitenmoduliertes Signal erzeugbar sein kann und/oder wobei der Ausgang des Komparators (20) mit einem insbesondere monostabilen Multivibrator (22) verbunden ist.

8. Vorrichtung nach Anspruch 6 oder 7, **dadurch gekennzeichnet, dass** mittels Ausgangssignals des Multivibrators (22) der Multiplexer (16) steuerbar ist.

9. Vorrichtung nach einem der Ansprüche 1 bis 7, **dadurch gekennzeichnet, dass** mittels einer Auswerteschaltung die Position des Objekts (1) ermittelbar ist.

10. Verfahren zur Detektion der Position eines Objekts (1), insbesondere des Ankers (2) eines Ventils (3), beispielsweise eines Ein- und Auslassventils, Kraftstoffeinspritzventils, Gaswechselventils oder dergleichen, vorzugsweise mittels einer Vorrichtung gemäß einem der Ansprüche 1 bis 9, mit mindestens zwei Spulen (4, 5), vorzugsweise zwei Magnetspulen, die mit Strom beaufschlagbar sind, um das Objekt (1) zwischen den zwei Spulen (4, 5) zu bewegen, wobei die beiden Spulen (4, 5) - wechselweise - zum Bewegen des Objekts (1) zwischen den Spulen (4, 5) und zur Detektion der Position des Objekts (1) dienen, **dadurch gekennzeichnet, dass** mindestens eine Spule (4,5) in mindestens zwei Sektionen (10, 11,10', 11') unterteilt ist, wobei die erste Sektion (10, 10') näher am Objekt (1) angeordnet ist als die zweite Sektion (11, 11') und dass der Abstand zwischen der zweiten Sektion (11, 11') und dem Objekt (1)größer als die Hälfte des Durchmessers der Spule (4, 5) ist, wobei die Impedanz der ersten Sektion (10, 10') größer ist als die Impedanz der zweiten Sektion (11,11').

11. Verfahren nach Anspruch 10, **dadurch gekennzeichnet, dass** die zur Detektion der Position des Objekts (1) verwendete Spule (4, 5) mit hochfrequentem Strom, vorzugsweise kleiner Amplitude, gespeist wird.

12. Verfahren nach Anspruch 10 oder 11, **dadurch gekennzeichnet, dass** die Impedanz der zur Detektion des Objekts (1) verwendeten Spule (4, 5) exponentiell vom Abstand des Objekts (1) abhängt kann und/oder wobei die Spule (4, 5) mit einem Operationsverstärker (17) einen Spannungs-Strom-Wandler bilden kann.

13. Verfahren nach einem der Ansprüche 10 bis 12, **dadurch gekennzeichnet, dass** die Position des Objekts (1) durch die Änderung der Impedanz der ersten Sektion (10, 10') bestimmt wird, wobei die Impedanz der zweiten Sektion (11, 11') der Spule (4, 5) im Wesentlichen von der Änderung der Position des Objekts (1) unabhängig sein kann und/oder wobei die erste Sektion (10, 10') durch eine Stromquelle gespeist werden kann und/oder wobei der in der ersten Sektion (10, 10') fließende Strom von der zweiten Sektion (11, 11') abhängig sein kann.

14. Verfahren nach Anspruch 13, **dadurch gekennzeichnet, dass** der Spannungsabfall ($U_v$) an der ersten Sektion (10, 10') mittels eines Instrumentalverstärkers (18) erfasst wird, wobei ein Zusammenhang

$$U_V = K \cdot U_{in} \cdot \left| \frac{Z_{s1}}{Z_{s2}} \right| \cdot e^{\gamma x}$$

besteht, wobei der Ausgang des Instrumentalverstärkers (18) mit dem Eingang eines Differentiators (19) verbunden sein kann und/oder wobei am Ausgang des Differentiators (19) die Spannung

$$U_S = K \cdot \left[ U_{in} \cdot \frac{Z_{s1}}{Z_{s2}} \right] \cdot e^{\gamma x} \cdot e^{-t0(x)/\tau}$$

anliegen kann und/oder wobei der Ausgang des Differentiators (19) mit einem Komparator (20) verbunden ist, **dadurch gekennzeichnet, dass** die Spannung am Ausgang des Differentiators (19) mittels des Komparators (20) mit

$$U_S = U_0 = K \cdot \left[ U_{in} \cdot \frac{Z_{s1}}{Z_{s2}} \right] \cdot e^{\gamma x} \cdot e^{-t_0(x)/\tau}$$

einer konstanten Spannung ($U_O$) verglichen werden kann und/oder wobei die Zeit ($t_o(x)$) proportional zur Position des Objekts (1) ist

$$t_0(x) = \tau \cdot \ln \cdot \left[ K \cdot \frac{U_{in}}{U_0} \cdot \left| \frac{Z_{s1}}{Z_{s2}} \right| \right] + \gamma x$$

und/oder wobei mittels der Änderung der konstanten Spannung ($U_O$) und/oder der Zeitkonstanten $\tau$ die Werte der Zeit ($t_o(x)$) geregelt werden kann.

## Claims

1. Device for detecting the position of an object (1), in particular of the armature (2) of a valve (3), for example of an inlet and outlet valve, a fuel injection valve, gas exchange valve or similar, with at least two coils (4, 5), preferably two solenoid coils, through which current can flow in order to move the object (1) between the two coils (4, 5), wherein the two coils (4, 5) serve - alternately - to move the object (1) between the coils (4, 5) and to detect the position of the object (1),
**characterised in that** at least one coil (4, 5) is divided into at least two sections (10, 11, 10', 11'), wherein the first section (10, 10') is disposed nearer to the object (1) than the second section (11, 11'), and that the distance between the second section (11, 11') and the object (1) is greater than half the diameter of the coil (4, 5), wherein the impedance of the first section (10, 10') is higher than the impedance of the second section (11, 11').

2. Device according to Claim 1, **characterised in that** the object (1) is disposed on a shaft (6).

3. Device according to Claim 1 or 2, **characterised in that** the coils (4, 5) are disposed in at least one body (7, 8), wherein the body or bodies (7, 8) is/are preferably ferromagnetic.

4. Device according to any one of Claims 1 to 3, **characterised in that** the object (1) can be moved between two end positions, and/or that the object (1) is held by means of at least one spring (9) in one position, in particular an end position of the valve (3).

5. Device according to any one of Claims 1 to 4, **characterised in that** the impedance of the first section (10, 10') is approximately three to five times greater than the impedance of the second section (11, 11'), wherein at least one coil (4, 5) can comprise at least two connection points (12, 12', 13, 13') and at least one tap (14, 14'), preferably at the respective end points of the sections (10, 11, 10', 11'), and/or wherein the performance of the two sections (10, 11, 10', 11') of the coil (4, 5) can be identical when the object (1) is in the end position, and/or wherein the adaptation of the performance is preferably achieved by adapting the ratio of the number of turns of the first (10, 11) and second section (10', 11').

**6.** Device according to any one of Claims 1 to 5, **characterised in that** at least one of the coils (4, 5) forms with at least one operational amplifier (17) a voltage-to-current converter, wherein the tap (14, 14') between the first (10, 10') and second section (11, 11') can be connected to the inverting input of the operational amplifier (17), and/or wherein a multiplexer (16) can be connected to the non-inverting input of the operational amplifier (17), and/or wherein the multiplexer (16) can be controlled by means of a microcomputer (23) or a crystal oscillator, and/or wherein the frequency of the microcomputer or crystal oscillator is a great deal higher than the frequency of the current with which the coil (4, 5) can be activated to move the object (1).

**7.** Device according to Claim 5 or 6, **characterised in that** the voltage drop at the first section (10, 10') can be detected by means of an instrumental amplifier (18), wherein a relation

$$U_V = K \cdot U_{in} \cdot \left| \frac{Z_{s1}}{Z_{s2}} \right| \cdot e^{\gamma x}$$

exists, wherein the output of the instrumental amplifier (18) can be connected to the input of a differentiator (19), and/or wherein the output of the differentiator (19) can have the voltage

$$U_s = K \cdot \left[ U_{in} \cdot \frac{Z_{s1}}{Z_{s2}} \right] \cdot e^{\gamma x} \cdot e^{-r_0(x)/\tau} \, ,$$

and/or wherein the output of the differentiator (19) can be connected to a comparator (20), and/or wherein a pulse width modulated signal can be generated at the output of the comparator (20), and/or wherein the output of the comparator (20) is connected to a - in particular monostable - multivibrator (22).

**8.** Device according to Claim 6 or 7, **characterised in that** the multiplexer (16) can be controlled by means of the output signal of the multivibrator (22).

**9.** Device according to any one of Claims 1 to 7, **characterised in that** the position of the object (1) can be established by means of an evaluation circuit.

**10.** Method for detecting the position of an object (1), in particular of the armature (2) of a valve (3), for example of an inlet and outlet valve, a fuel injection valve, gas exchange valve or similar, preferably by means of a device according to any one of Claims 1 to 9, with at least two coils (4, 5), preferably two solenoid coils, through which current can flow in order to move the object (1) between the two coils (4, 5), wherein the two coils (4, 5) serve - alternately - to move the object (1) between the coils (4, 5) and to detect the position of the object (1),
**characterised in that** at least one coil (4, 5) is divided into at least two sections (10, 11, 10', 11'), wherein the first section (10, 10') is disposed nearer to the object (1) than the second section (11, 11'), and that the distance between the second section (11, 11') and the object (1) is greater than half the diameter of the coil (4, 5), wherein the impedance of the first section (10, 10') is higher than the impedance of the second section (11, 11').

**11.** Method according to Claim 10, **characterised in that** the coil (4, 5) which is used to detect the position of the object (1) is fed with high-frequency current, preferably of a low amplitude.

**12.** Method according to Claim 10 or 11, **characterised in that** the impedance of the coil (4, 5) which is used to detect the object (1) can depend exponentially on the distance of the object (1), and/or wherein the coil (4, 5) can form with an operational amplifier (17) a voltage-to-current converter.

**13.** Method according to any one of Claims 10 to 12,
**characterised in that** the position of the object (1) is determined by changing the impedance of the first section (10, 10'), wherein the impedance of the second section (11, 11') of the coil (4, 5) can be substantially independent of the change of the position of the object (1), and/or wherein the first section (10, 10') can be fed by a current source, and/or wherein the current flowing in the first section (10, 10') can be dependent on the second section (11, 11').

**14.** Method according to Claim 13, **characterised in that** the voltage drop ($U_V$) at the first section (10, 10') is detected by means of an instrumental amplifier (18), wherein a relation

$$U_V = K \cdot U_{in} \cdot \left| \frac{Z_{s1}}{Z_{s2}} \right| \cdot e^{\gamma x}$$

exists, wherein the output of the instrumental amplifier (18) can be connected to the input of a differentiator (19), and/or wherein the voltage

$$U_s = K \cdot \left[ U_{in} \cdot \frac{Z_{s1}}{Z_{s2}} \right] \cdot e^{\gamma x} \cdot e^{-t_0(x)/\tau}$$

can be present at the output of the differentiator (19), and/or wherein the output of the differentiator (19) is connected to a comparator (20), **characterised in that** the voltage at the output of the differentiator (19) can be compared by means of the comparator (20) with a constant voltage ($U_o$)

$$U_s = U_0 = K \cdot \left[ U_{in} \cdot \frac{Z_{s1}}{Z_{s2}} \right] \cdot e^{\gamma x} \cdot e^{-t_0(x)/\tau} ,$$

and/or wherein the time ($t_0(x)$) is proportional to the position of the object (1)

$$t_0(x) = \tau \cdot \ln \cdot \left[ K \cdot \frac{U_{in}}{U_0} \cdot \left| \frac{Z_{s1}}{Z_{s2}} \right| \right] + \gamma x ,$$

and/or wherein the values of the time ($t_0(x)$) can be regulated by means of the change of the constant voltage ($U_o$) and/or of the time constant $\tau$.

## Revendications

1. Dispositif pour la détection de la position d'un objet (1), en particulier de l'induit (2) d'une valve (3), par exemple d'une valve d'admission et d'échappement, d'une valve d'injection de combustible, d'une valve de gaz à deux voies ou similaire, avec au moins deux bobines (4,5), de préférence deux bobines d'électro-aimant, qui peuvent être soumises à l'action d'un courant pour déplacer l'objet (1) entre les deux bobines (4,5), les deux bobines (4,5) servant - tour à tour - pour le déplacement de l'objet (1) entre les bobines (4,5) et pour la détection de la position de l'objet (1), **caractérisé par le fait qu'**au moins une bobine (4,5) est divisée en au moins deux sections (10, 11, 10', 11'), la première section (10, 10') étant disposée plus près de l'objet (1) que la seconde section (11, 11') et que la distance entre la seconde section (11, 11') et l'objet (1) est plus grande que la moitié du diamètre de la bobine (4,5), l'impédance de la première section (10, 10') étant plus grande que l'impédance de la seconde section (11, 11').

2. Dispositif selon la revendication 1, **caractérisé par le fait que** l'objet est disposé sur un arbre (6).

3. Dispositif selon la revendication 1 ou 2, **caractérisé par le fait que** les bobines (4, 5) sont disposées dans au moins un corps (7,8), le ou les corps (7, 8) étant de préférence ferromagnétiques.

4. Dispositif selon l'une des revendications 1 à 3, **caractérisé par le fait que** l'objet (1) est mobile entre deux positions d'extrémité et/ou que l'objet (1) est maintenu dans une position, en particulier une position d'extrémité de la valve (3), au moyen d'au moins un ressort (9).

5. Dispositif selon l'une des revendications 1 à 4, **caractérisé par le fait que** l'impédance de la première section (10, 10') est environ trois à cinq fois plus grande que l'impédance de la seconde section (11. 11'), au moins une bobine (4, 5) pouvant présenter au moins deux points de jonction (12, 12', 13, 13') et au moins une prise (14, 14'), de préférence aux points d'extrémité respectifs des sections (10, 11, 10', 11'), et/ou le facteur de qualité des deux sections (10, 11, 10', 11') pouvant être égal quand l'objet (1) se trouve dans la position d'extrémité et/ou l'adaptation des facteurs de qualité étant atteinte de préférence par l'adaptation du rapport du nombre des spires de la première (10, 10') et de la seconde sections (11, 11').

**6.** Dispositif selon l'une des revendications 1 à 5, **caractérisé par le fait qu'**au moins l'une des bobines (4, 5) forme avec au moins un amplificateur opérationnel (17) un transformateur tension-courant, la prise (14, 14') pouvant être reliée entre la première (10, 10') et la seconde sections (11, 11') avec l'entrée inversée de l'amplificateur opérationnel, et/ou un multiplexeur (16) pouvant être relié avec l'entrée non inversée de l'amplificateur opérationnel (17) et/ou le multiplexeur (16) pouvant être commandé au moyen d'un microcalculateur (23) ou d'un oscillateur à quartz et/ou la fréquence du microcalculateur ou de l'oscillateur à quartz pouvant être bien plus grande que la fréquence du courant par lequel la bobine (4, 5) peut être commandée pour le déplacement de l'objet (1).

**7.** Dispositif selon la revendication 5 ou 6, **caractérisé par le fait que** la chute de tension à la première section (10, 10') peut être détectée au moyen d'un amplificateur instrumenta! (18), une relation

$$U_v = K \cdot U_m \cdot \left| \frac{Z_n}{Z_{s2}} \right| \cdot e^{ix}$$

existant, la sortie de l'amplificateur instrumental (18) pouvant être reliée avec l'entrée d'un différentiateur (19) et/ou la sortie du différentiateur (19) pouvant présenter la tension

$$U_s = K \cdot \left[ U_m \cdot \frac{Z_{s1}}{Z_{s2}} \right] \cdot e^{\gamma x} \cdot e^{-i\kappa(x)t}$$

et/ou la sortie du différentiateur (19) pouvant être reliée avec un comparateur (20) et/ou un signal modulé en largeur plus pouvant être engendré à la sortie du comparateur (20) et/ou la sortie du comparateur (20) étant reliée avec la sortie d'un multivibrateur (22) en particulier monostable.

**8.** Dispositif selon la revendication 6 ou 7, **caractérisé par le fait que** le multiplexeur (16) peut être commandé au moyen du signal de sortie du multivibrateur (22).

**9.** Dispositif selon l'une des revendications 1 à 7, **caractérisé par le fait que** la position de l'objet (1) peut être détectée au moyen d'un circuit d'évaluation.

**10.** Procédé pour la détection de la position d'un objet (1), en particulier de l'induit (2) d'une valve (3), par exemple d'une valve d'admission et d'échappement, d'une valve d'injection de combustible, d'une valve de gaz à deux voies ou similaire, de préférence au moyen d'un dispositif selon l'une des revendications 1 à 9, avec au moins deux bobines (4,5), de préférence deux bobines d'électro-aimant, qui peuvent être soumises à l'action d'un courant pour déplacer l'objet (1) entre les deux bobines (4,5), les deux bobines (4,5) servant - tour à tour - pour le déplacement de l'objet (1) entre les bobines (4,5) et pour la détection de la position de l'objet (1), **caractérisé par le fait qu'**au moins une bobine (4,5) est divisée en au moins deux sections (10, 11, 10', 11'), la première section (10, 10') étant disposée plus prés de l'objet (1) que la seconde section (11, 11') et que la distance entre la seconde section (11, 11') et l'objet (1) est plus grande que la moitié du diamètre de la bobine (4,5), l'impédance de la première section (10, 10') étant plus grande que l'impédance de la seconde section (11. 11').

**11.** Procédé selon la revendication 10, **caractérisé par le fait que** la bobine (4, 5) utilisée pour la détection de la position de l'objet (1) est alimentée par un courant haute fréquence, de préférence à faible amplitude.

**12.** Procédé selon la revendication 10 ou 11, **caractérisé par le fait que** l'impédance de la bobine (4, 5) utilisée pour la détection de l'objet (1) peut dépendre exponentiellement de la distance de l'objet (1) et/ou la bobine (4, 5) pouvant former avec un amplificateur opérationnel (17) un transformateur tension-courant.

**13.** Procédé selon l'une des revendications 10 à 12, **caractérisé par le fait que** la position de l'objet (1) est déterminée par la modification de l'impédance de la première section (10, 10'), l'impédance de la seconde section (11, 11') de la bobine (4, 5) pouvant être pour l'essentiel indépendante de la modification de la position de l'objet (1) et/ ou la première section (10, 10') pouvant être alimentée par une source de courant et/ou le courant s'écoulant dans la première section (10, 10') pouvant être dépendant de la seconde section (11, 11').

**14.** Procédé selon la revendication 13, **caractérisé par le fait que** la chute de tension ($U_v$) à la première section (10, 10') est détectée au moyen d'un amplificateur instrumental, une relation

$$U_V = K \cdot U_{in} \cdot \left| \frac{Z_{s1}}{Z_{s2}} \right| \cdot e^{\gamma x}$$

existant, la sortie de l'amplificateur instrumental (18) pouvant être reliée avec l'entrée d'un différentiateur (19) et/ou la tension

$$U_\delta = K \cdot \left[ U_{in} \cdot \frac{Z_{s1}}{Z_{s2}} \right] \cdot e^{\gamma x} \cdot e^{-t_0(x)/\tau}$$

pouvant être présente à la sortie du différentiateur (19) et/ou la sortie du différentiateur (19) étant reliée avec un comparateur (20), **caractérisé par le fait que** la tension à la sortie du différentiateur (19) peut être comparée au moyen du comparateur (20) à une tension constante ($U_o$) avec

$$U_\delta = U_0 = K \cdot \left[ U_{in} \cdot \frac{Z_{s1}}{Z_{s2}} \right] \cdot e^{\gamma x} \cdot e^{-t_0(x)/\tau}$$

et/ou le temps ($t_0(x)$) étant proportionnel à la position de l'objet (1)

$$t_0(x) = \tau \cdot \ln \left[ K \cdot \frac{U_{in}}{U_0} \cdot \left| \frac{Z_{s1}}{Z_{s2}} \right| \right] + \gamma x$$

et/ou la valeur du temps ($t_0(x)$) pouvant être régulée au moyen de la modification de la tension constante ($U_o$) et/ou de la constante de temps $\tau$.

**Fig. 1**

**Fig. 2**

**Fig. 3**

**Fig. 4**

a) $U_s$

$U_0$

t

b) $U_K$

t

$t_0(x)$    $\Delta t$    $t_0(x)$    $\Delta t$

# Fig. 5

**IN DER BESCHREIBUNG AUFGEFÜHRTE DOKUMENTE**

**In der Beschreibung aufgeführte Patentdokumente**

- DE 19735375 C1
- DE 19856528 A1
- DE 19836769 C1
- US 5818680 A